# FASCICULE DE BREVET EUROPEEN

(11) **EP 3 978 818 B1**
(45) Date de publication et mention de la délivrance du brevet: **12.02.2025**
(21) Numéro de dépôt: 21200309.9
(22) Date de dépôt: 30.09.2021
(51) Int. Cl.: F24F 11/32, F24F 11/52, F24F 11/526, F24F 13/06, F24F 11/00

(54) **BOUCHE D'EXTRACTION OU INSUFFLATION D'AIR AMÉLIORÉE POUR SYSTÈME DE VENTILATION D'UN LOCAL**
VERBESSERTE LUFTABSAUGUNG ODER -EINBLASUNG FÜR EIN RAUMBELÜFTUNGSSYSTEM
IMPROVED VENT FOR EXTRACTING OR BLOWING AIR FOR VENTILATION SYSTEM FOR A ROOM

(30) Priorité: 01.10.2020 FR 2010061
(43) Date de publication de la demande: 06.04.2022
(73) Titulaire: Aereco, 77615 Marne la Vallée Cedex 03 (FR)
(72) Inventeur: LEGREE, Marc, 77615 MARNE LA VALLEE CEDEX 3 (FR); MARCHEWKA, ALBIN, 77615 MARNE-LA-VALLEE Cedex 3 (FR); PARSY, François, 77615 MARNE LA VALLEE CEDEX 3 (FR)
(74) Mandataire: Germain Maureau

(56) Documents cités:
- EP-A1- 3 130 865
- EP-A2- 3 474 093
- FR-A1- 3 040 086
- FR-A1- 3 071 592
- GB-A- 2 512 043

## Description

L'invention concerne le domaine des systèmes de ventilation de locaux, tels que des logements individuels ou collectifs, ou des locaux tertiaires, comportant une ou plusieurs pièces. L'invention concerne plus particulièrement une bouche d'extraction ou insufflation d'air pour système de ventilation d'un local, et un système de ventilation d'un local comprenant une telle bouche d'extraction ou insufflation d'air.

Actuellement les systèmes de ventilation de locaux comprennent un ventilateur relié à une ou plusieurs bouches d'extraction ou insufflation d'air par des conduits. Le ventilateur est généralement disposé par exemple dans des combles ou sur un toit du local, tandis que les bouches d'extraction ou insufflations d'air sont disposées dans différentes pièces du local. Pour tout système de ventilation de local, des conditions de fonctionnement sont définies. Ces conditions de fonctionnement sont par exemple un débit d'extraction ou insufflation d'air qui peut varier par exemple en fonction d'un taux d'humidité, d'une concentration en CO2 et/ou COV, d'une détection de présence de personnes par des capteurs pyroélectriques, d'un agenda d'heures et/ou jours préétablis, ....

Un inconvénient des systèmes de ventilation existants est qu'il n'est pas possible de détecter des défauts du système de ventilation par rapport aux conditions de fonctionnement définies, afin d'en informer un utilisateur. De tels défauts peuvent être par exemple dus à une panne du ventilateur, un défaut d'étanchéité d'un conduit ou d'un élément se rattachant à un conduit, un mauvais dimensionnement du réseau de ventilation, un terminal de ventilation mal positionné (après une maintenance ou un nettoyage par exemple), ... Le document FR 3 040 86 A1 décrit une bouche d'extraction ou insufflation d'air comportant des moyens de détection d'un défaut d'un système de ventilation.

L'invention a pour but de remédier à ces inconvénients en proposant, une bouche d'extraction ou insufflation d'air pour système de ventilation d'un local, la bouche d'extraction ou insufflation d'air comprenant des moyens de détection d'un défaut du système de ventilation configurés pour détecter un défaut du système de ventilation à distance de la bouche d'extraction ou insufflation d'air, selon la revendication indépendante 1 et les revendications dépendantes 2 à 9.

Ainsi les moyens de détection d'un défaut du système de ventilation intégrés dans la bouche d'extraction ou insufflation permettent de détecter un défaut dans le système de ventilation. La bouche d'extraction ou insufflation d'air selon l'invention peut être intégrée dans des systèmes de ventilation de locaux existants, sans nécessiter de travaux conséquents.

En outre, les moyens de détection d'un défaut du système de ventilation permettent de détecter un défaut déporté de la bouche d'extraction ou insufflation d'air. Ils sont faciles à mettre en place dans des systèmes de ventilation existants et aisément accessibles, par exemple pour maintenance.

Selon une caractéristique de l'invention, la bouche d'extraction ou insufflation d'air comprend une arrivée d'air et une sortie d'air, et le dispositif de mesure est configuré pour mesurer au moins une différence de pression entre l'arrivée d'air et la sortie d'air. La mesure de cette différence de pression entre l'arrivée d'air et la sortie d'air permet de détecter un défaut du système de ventilation.

L'au moins une différence de pression entre l'arrivée d'air et la sortie d'air mesurée correspond à une donnée collectée par le dispositif de mesure.

En effet, la différence de pression entre l'arrivée d'air et la sortie d'air permet d'avoir par exemple une information sur un débit d'air traversant la bouche d'extraction ou insufflation.

Selon une caractéristique additionnelle, le dispositif de mesure comporte au moins un capteur différentiel de pression configuré pour mesurer la différence de pression entre l'arrivée d'air et la sortie d'air.

En effet, lorsque le système de ventilation fonctionne dans des conditions souhaitées, la différence de pression entre l'arrivée d'air et la sortie d'air de la bouche d'extraction ou insufflation d'air est comprise dans une plage de fonctionnement nominale, mais en cas de défaut, la différence de pression est en dehors de cette plage de fonctionnement nominale.

En variante, le dispositif de mesure comprend un premier capteur de pression configuré pour mesurer une pression au niveau de l'arrivée d'air de la bouche d'extraction ou insufflation d'air, et un deuxième capteur de pression configuré pour mesurer une pression au niveau de la sortie d'air de la bouche d'extraction ou insufflation d'air. De cette façon le dispositif de mesure permet aux moyens de détection de calculer la différence de pression entre l'arrivée d'air et la sortie d'air de la bouche d'extraction ou insufflation d'air.

Le dispositif de mesure est configuré pour effectuer au moins une mesure.

Selon une caractéristique additionnelle, le dispositif de mesure est configuré pour effectuer plusieurs mesures, à intervalles réguliers ou irréguliers.

Selon une caractéristique de l'invention, les moyens de détection d'un défaut du système de ventilation comprennent des moyens de signalisation configurés pour émettre au moins un signal lorsqu'un défaut est détecté.

Selon une caractéristique de l'invention, les moyens de détection d'un défaut du système de ventilation comprennent un dispositif d'analyse de données, configuré pour détecter une différence de pression entre l'arrivée d'air et la sortie d'air, en dehors d'une plage de fonctionnement nominale.

Par « dispositif d'analyse de données » on entend un dispositif d'analyse des données collectées par le dispositif de mesure.

Selon une caractéristique de l'invention, le dispositif d'analyse de données est configuré pour actionner les moyens de signalisation d'un défaut lorsqu'un défaut est détecté.

Plus précisément, le dispositif d'analyse de données est configuré pour actionner les moyens de signalisation d'un défaut lorsqu'une différence de pression entre l'arrivée d'air et la sortie d'air est détectée en dehors d'une plage de fonctionnement nominale.

Selon une caractéristique de l'invention, les moyens de signalisation sont configurés pour émettre au moins un signal lorsque le dispositif d'analyse de données détecte une différence de pression entre l'arrivée d'air et la sortie d'air en dehors d'une plage de fonctionnement nominale.

Selon une caractéristique de l'invention, le dispositif d'analyse de données comprend un algorithme configuré pour compenser des variations environnementales et des incertitudes du dispositif de mesure.

En effet, les variations environnementales telles que la présence de vent par exemple, peuvent influencer les valeurs de grandeurs physiques mesurées, telles que la pression. Le dispositif d'analyse de données comprenant l'algorithme permet alors aux moyens de détection d'un défaut de compenser ces variations environnementales, et ainsi d'éviter les faux positifs et les faux négatifs. Il permet alors une plus grande fiabilité de détection d'un défaut.

L'algorithme est configuré pour effectuer une analyse historique des données collectées par le dispositif de mesure.

Par « analyse historique des données », on entend que l'algorithme est configuré pour analyser les données collectées par le dispositif de mesure dans le temps, de sorte à déterminer si les données collectées correspondent à un défaut du système de ventilation ou à un fonctionnement normal pouvant comprendre un phénomène transitoire tel que des variations environnementales et/ou des incertitudes de mesure. L'algorithme détermine qu'il y a un défaut dans le système de ventilation si plusieurs données collectées correspondent à un défaut du système de ventilation, c'est-à-dire si une série de données collectées correspond à un défaut du système de ventilation.

Selon une caractéristique additionnelle, l'algorithme est configuré pour actionner les moyens de signalisation d'un défaut lorsqu'il détermine que plusieurs données correspondent à un défaut du système de ventilation.

En d'autres termes, l'algorithme est configuré pour actionner les moyens de signalisation d'un défaut lorsqu'il détermine qu'une série de données correspond à un défaut du système de ventilation.

Par incertitudes du dispositif de mesure on entend sa justesse, sa dérive, le bruit de mesure, les influences de la température et de l'humidité, etc.

L'invention concerne en outre un système de ventilation, selon la revendication 10, comportant une bouche d'extraction ou insufflation d'air telle que décrite précédemment, un ventilateur et un conduit de circulation d'air reliant le ventilateur à la bouche d'extraction ou insufflation d'air.

L'invention concerne également un procédé pour la détection d'un défaut dans un système de ventilation comprenant une bouche d'extraction ou insufflation, selon la revendication indépendante 11 et les revendications dépendantes 12 à 14.

Selon une caractéristique additionnelle, l'étape de compensation des variations environnementales et/ou des incertitudes de mesure est réalisée par ajout d'une valeur de signalisation à un compteur si l'au moins une différence de pression est en dehors de la plage de fonctionnement nominale, et comparaison du compteur avec une valeur d'activation prédéterminée.

Selon une caractéristique additionnelle, l'étape de signalisation consiste à signaler lorsque le compteur atteint et/ou dépasse la valeur d'activation prédéterminée.

Selon une caractéristique additionnelle, le procédé est un procédé pour la détection d'un défaut dans un système de ventilation comprenant une bouche d'extraction ou insufflation telle que décrit précédemment.

Selon une caractéristique additionnelle, le procédé est un procédé pour la détection d'un défaut dans un système de ventilation tel que décrit précédemment.

D'autres caractéristiques et avantages de la présente invention apparaitrons à la lecture de la description qui va suivre et à l'examen des figures annexées dans lesquelles :
[Fig. 1] est une vue schématique d'un système de ventilation selon l'invention un mode de réalisation de l'invention ;
[Fig. 2] est une vue schématique en perspective de face d'une bouche d'extraction d'air selon un mode de réalisation de l'invention ;
[Fig. 3] est une vue schématique partielle en perspective de la bouche de la figure 2, vue de dos ;
[Fig. 4] est une vue schématique de moyens de détection d'un défaut d'un système de ventilation selon l'invention ;
[Fig. 5] est une vue schématique illustrant un algorithme des moyens de détection d'un système de ventilation selon l'invention.

Dans la description qui va suivre et dans les revendications, des composants identiques, similaires ou analogues seront désignés par les mêmes chiffres de référence.

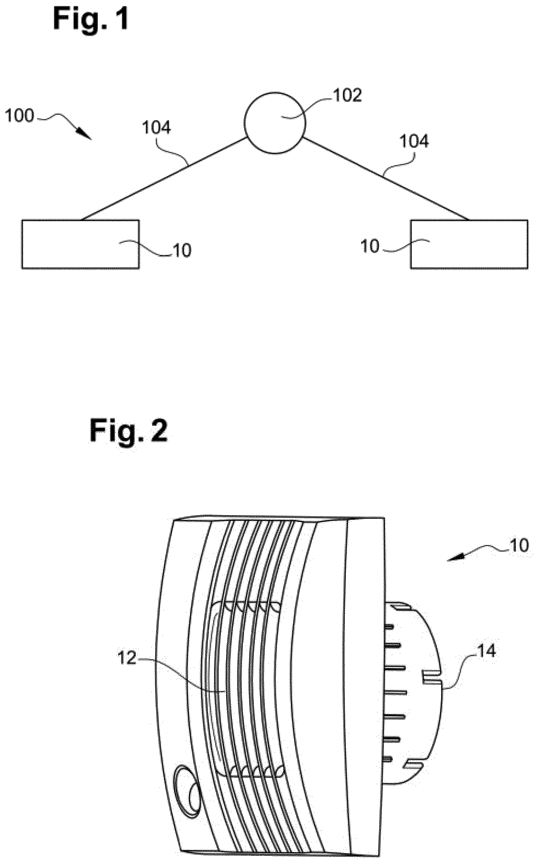

La figure 1 représente un système de ventilation 100 d'un local, comprenant une bouche 10 d'extraction ou insufflation d'air selon l'invention, reliée à un ventilateur 102 par un conduit 104 de circulation d'air. Le système de ventilation 100 peut également comporter une autre bouche 10 d'extraction ou insufflation d'air, reliée au ventilateur par un autre conduit 104 de circulation d'air.

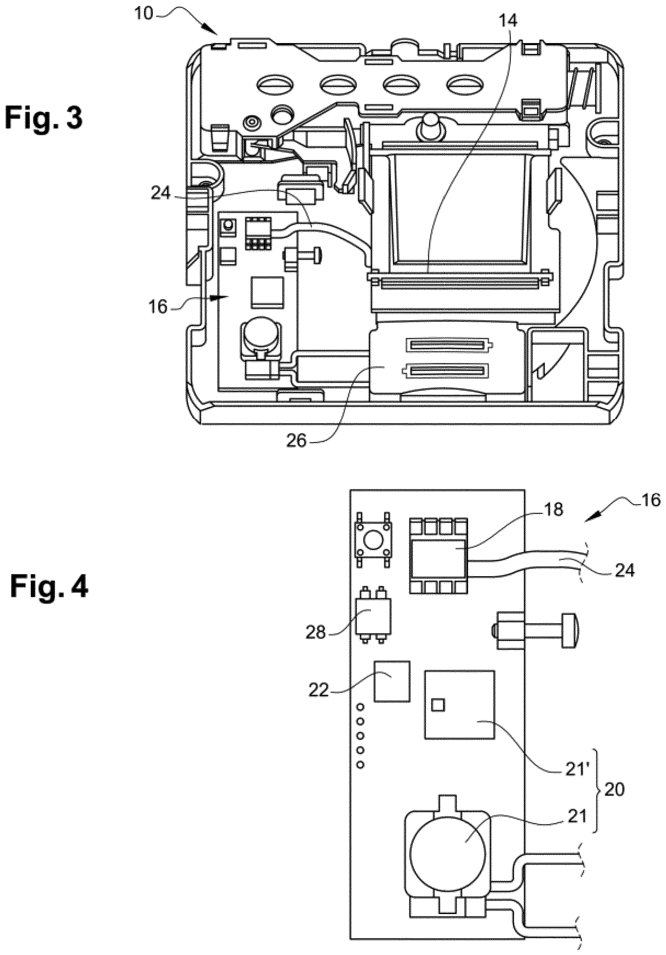

Les figures 2 et 3 illustrent plus particulièrement une bouche 10 d'extraction d'air comprenant une arrivée d'air 12 et une sortie d'air 14.

En variante, la bouche 10 pourrait être une bouche d'insufflation d'air, auquel cas l'arrivée d'air 12 et la sortie d'air 14 seraient inversées.

La bouche 10 d'extraction ou d'insufflation d'air comprend des moyens de détection 16 d'un défaut du système de ventilation 100. Les moyens de détection 16 sont représentés en détails sur la figure 4. Ils sont configurés pour détecter un défaut à distance de la bouche 10 d'extraction ou d'insufflation d'air, c'est-à-dire déporté de la bouche 10 d'extraction ou d'insufflation d'air. Par exemple, les moyens de détection 16 sont configurés pour détecter un défaut du ventilateur 102, du conduit 104 de circulation d'air, d'une autre bouche 10 d'extraction ou insufflation d'air, et/ou d'un autre conduit 104 de circulation d'air, reliant l'autre bouche 10 d'extraction ou d'insufflation d'air au ventilateur 102.

Les moyens de détection 16 peuvent comprendre un dispositif de mesure 18. Le dispositif de mesure 18 est configuré pour mesurer au moins une grandeur physique au niveau de la bouche 10 d'extraction ou d'insufflation d'air. L'au moins une grandeur physique mesurée correspond à une donnée collectée par le dispositif de mesure 18.

Les moyens de détection 16 peuvent également comprendre des moyens de signalisation 20 configurés pour émettre au moins un signal lorsqu'un défaut est détecté.

En outre, les moyens de détection 16 peuvent comprendre un dispositif d'analyse 22 de données, configuré pour actionner les moyens de signalisation 20 d'un défaut lorsqu'un défaut est détecté.

Le dispositif d'analyse 22 de données est configuré pour détecter si l'au moins une grandeur physique mesurée par le dispositif de mesure 18 est en dehors d'une plage de fonctionnement nominale. Ainsi, le dispositif d'analyse 22 de données est configuré pour détecter si l'au moins une donnée collectée par le dispositif de mesure 18 est en dehors de la plage de fonctionnement nominale.

Le dispositif d'analyse 22 de données, peut comprendre un algorithme configuré pour compenser des variations environnementales, telles que la présence de vent, et des incertitudes du dispositif de mesure 18. Par exemple, l'algorithme peut être configuré pour identifier une ou plusieurs donnée(s) mesurée(s) par le dispositif de mesure 18 comme correspondant à un défaut. En fonction des identifications de données, par exemple en fonction du nombre de données identifiées et/ou des valeurs des données identifiées et/ou du temps écoulé entre les données identifiées et/ou des valeurs de la ou des donnée(s) réalisée(s) avant et/ou entre et/ou après les données identifiées, l'algorithme peut actionner les moyens de signalisation 20. Ainsi, l'algorithme permet de ne pas actionner les moyens de signalisation 20 dès qu'une donnée anormale, par exemple en dehors d'une plage de fonctionnement nominale, susceptible de correspondre à un défaut, par exemple au-delà d'un certain seuil, est détectée, car cette donnée pourrait correspondre à des variations environnementales, telles que la présence de vent, ou à des incertitudes du dispositif de mesure, mais de n'actionner les moyens de signalisation 20 que lorsque plusieurs données dans ce sens auront été accumulées. L'algorithme peut permettre d'actionner les moyens de signalisation 20 lorsqu'une quantité suffisante de données anormales auront été accumulées. Il est ainsi possible de compenser des événements ponctuels exogènes à la bouche 10 d'extraction. Par exemple, l'algorithme peut ainsi être configuré pour filtrer et/ou exclure et/ou pondérer une ou plusieurs donnée(s), par exemple une ou plusieurs donnée(s) susceptible(s) de correspondre à une variation environnementale et/ou une incertitude du dispositif de mesure, au moins temporairement, dans le cadre de l'analyse en vue d'actionner ou non les moyens de signalisation 20.

L'algorithme peut être configuré pour actionner les moyens de signalisation 20 d'un défaut lorsqu'il détermine que plusieurs données correspondent à un défaut du système de ventilation. Les données peuvent être ou comprendre des mesures de grandeur physique en dehors de la plage de fonctionnement nominale, effectuées par le dispositif de mesure 18.

Plus précisément, l'algorithme peut être configuré pour actionner les moyens de signalisation 20 d'un défaut lorsqu'il détermine qu'une série de données correspond à un défaut du système de ventilation. La série de données peut être ou comprendre une série des mesures de grandeur physique en dehors de la plage de fonctionnement nominale effectuées par le dispositif de mesure 18.

L'algorithme peut être configuré pour actionner les moyens de signalisation 20 d'un défaut lorsqu'une série de données est détectée en dehors de la plage de fonctionnement nominale.

L'algorithme est décrit plus en détail dans la suite de la description.

Le dispositif de mesure 18 peut être configuré pour effectuer plusieurs mesures, à intervalles réguliers ou irréguliers.

Les moyens de signalisation 20 peuvent être configurés pour émettre un signal visuel, par exemple via une LED 21, et/ou sonore, par exemple via une alarme 21', et/ou un signal à distance, par exemple via SMS, courriel, ...

A titre d'exemple, la grandeur physique mesurée par le dispositif de mesure 18 peut être une différence de pression par exemple entre l'arrivée d'air 12 et la sortie d'air 14.

Dans des conditions de fonctionnement souhaitées, la différence de pression entre l'arrivée d'air 12 et la sortie d'air 14 de la bouche 10 d'extraction ou insufflation d'air est comprise dans une plage de fonctionnement nominale. En revanche, en cas de défaut, la différence de pression est en dehors de cette plage de fonctionnement nominale.

Ainsi, le dispositif de mesure 18 peut être configuré pour mesurer au moins une différence de pression entre l'arrivée d'air 12 et la sortie d'air 14. La mesure de cette différence de pression entre l'arrivée d'air 12 et la sortie d'air 14 permet de détecter un défaut du système de ventilation 100. L'au moins une différence de pression entre l'arrivée d'air 12 et la sortie d'air 14 mesurée correspond à une donnée collectée par le dispositif de mesure 18.

Le dispositif d'analyse 22 de données, peut être configuré pour détecter une différence de pression entre l'arrivée d'air 12 et la sortie d'air 14, en dehors d'une plage de fonctionnement nominale. Ainsi, les données et/ou la série de données peuvent être ou comprendre des mesures de différence de pression en dehors de la plage de fonctionnement nominale, effectuées par le dispositif de mesure 18. Le dispositif d'analyse 22 de données, peut être configuré pour détecter une différence de pression parmi l'au moins une différence de pression mesurée par le dispositif de mesure 18, en dehors d'une plage de fonctionnement nominale. Le dispositif d'analyse 22 de données peut être configuré pour détecter si l'au moins une différence de pression mesurée par le dispositif de mesure 18 est en dehors d'une plage de fonctionnement nominale.

Les moyens de signalisation 20 peuvent être configurés pour émettre au moins un signal lorsque le dispositif de mesure 18 mesure une différence de pression entre l'arrivée d'air 12 et la sortie d'air 14 de la bouche 10 d'extraction ou insufflation d'air, en dehors de la plage de fonctionnement nominale.

Plus précisément, les moyens de signalisation 20 peuvent être configurés pour émettre au moins un signal lorsque le dispositif d'analyse 22 de données, détecte une différence de pression entre l'arrivée d'air 12 et la sortie d'air 14 de la bouche 10 d'extraction ou insufflation d'air, en dehors de la plage de fonctionnement nominale.

Le dispositif d'analyse 22 de données, peut être configuré pour actionner les moyens de signalisation 20 d'un défaut lorsqu'une différence de pression entre l'arrivée d'air 12 et la sortie d'air 14 est détectée en dehors d'une plage de fonctionnement nominale.

Le dispositif d'analyse 22 de données, comprenant l'algorithme, peut être configuré pour actionner les moyens de signalisation 20 d'un défaut lorsqu'une série de différences de pression entre l'arrivée d'air 12 et la sortie d'air 14 est détectée en dehors d'une plage de fonctionnement nominale.

Le dispositif de mesure 18 peut comprendre un capteur différentiel de pression configuré pour mesurer la différence de pression entre l'arrivée d'air 12 et la sortie d'air 14, au niveau de la bouche 10 d'extraction ou d'insufflation d'air. Il peut comprendre un tube 24 débouchant dans la bouche 10 d'extraction ou insufflation d'air, par exemple au niveau de la sortie d'air 14.

Dans une variante non représentée, le tube 24 peut déboucher dans la bouche 10 d'extraction ou insufflation d'air, au niveau de l'arrivée d'air 12.

Dans une variante non représentée, le capteur différentiel de pression peut comprendre deux tubes 24, débouchant respectivement au niveau de l'arrivée d'air 12 et au niveau de la sortie d'air 14.

Dans une variante non représentée, le dispositif de mesure 18 pourrait comprendre plusieurs capteurs différentiels de pression.

Dans une variante non représentée, le dispositif de mesure 18 peut comprendre un premier capteur de pression configuré pour mesurer une pression au niveau de l'arrivée d'air 12, et un deuxième capteur de pression configuré pour mesurer une pression au niveau de la sortie d'air 14, de la bouche 10 d'extraction ou d'insufflation d'air. Les moyens de détection 16 sont alors configurés pour effectuer une différence entre les pressions mesurées par le premier et le deuxième capteur de pression.

Ainsi, le dispositif de mesure 18 peut comprendre au moins deux capteurs de pression.

L'algorithme peut être configuré pour actionner les moyens de signalisation 20 d'un défaut lorsqu'une série de différences de pression mesurées par le ou les capteur(s) de pression, ou le ou les capteur(s) différentiel(s) de pression, est détectée en dehors d'une plage de fonctionnement nominale.

Lorsque le dispositif d'analyse 22 de données comprend l'algorithme configuré pour compenser des variations environnementales et des incertitudes du dispositif de mesure 18, les moyens de signalisations 20 sont configurés pour émettre au moins un signal lorsqu'une série de différences de pression entre l'arrivée d'air 12 et la sortie d'air 14 est détectée en dehors d'une plage de fonctionnement nominale.

Le dispositif de mesure 18 peut être programmé avec plusieurs plages de fonctionnement nominales. Un commutateur (non représenté) pourra alors permettre de choisir la plage de fonctionnement nominale à prendre en compte. L'algorithme peut tenir compte de la plage de fonctionnement nominale sélectionnée.

En variante, la plage de fonctionnement nominale est un seuil.

Les moyens de détection 16 peuvent comprendre un logement 26 pour batterie ou pile, ou pour une carte d'alimentation reliée au réseau électrique.

Un commutateur 28 permet avantageusement de choisir le mode d'alimentation entre la batterie ou pile, et la carte d'alimentation reliée au réseau électrique.

Le ou les signaux émis par les moyens de signalisation 20 peuvent être différents selon le type d'alimentation (batterie/pile ou réseau).

A titre d'exemple, dans le cas d'une alimentation par batterie ou pile, on peut choisir d'émettre un signal uniquement en cas de détection d'un défaut, tandis que dans le cas d'une alimentation sur réseau, on peut choisir d'émettre un premier signal lorsqu'aucun défaut n'est détecté, et un deuxième signal, différent du premier signal, lorsqu'un défaut est détecté.

De la même manière, l'intervalle des mesures effectuées par le dispositif de mesure 18 peut varier selon le type d'alimentation, par exemple de sorte qu'un plus grand nombre de mesures soit effectué dans le cas d'une alimentation sur réseau.

Ainsi, les moyens de détection d'un défaut 16 tels que décrits précédemment, peuvent comprendre :
- un dispositif de mesure 18 d'au moins une grandeur physique telle qu'une différence de pression, et/ou
- des moyens de signalisation 20 configurés pour émettre au moins un signal lorsqu'un défaut est détecté, et/ou
- un dispositif d'analyse 22 de données, le dispositif d'analyse 22 pouvant comporter un algorithme configuré pour compenser des variations environnementales et des incertitudes du dispositif de mesure 18.

L'algorithme peut comprendre un compteur auquel une valeur de signalisation est ajoutée lorsque le dispositif d'analyse 22 détecte une donnée en dehors de la plage de fonctionnement nominale. Par exemple, la valeur de signalisation est ajoutée à chaque fois que le dispositif d'analyse 22 détecte qu'une des données mesurées par le dispositif de mesure est en dehors de la plage de fonctionnement nominale.

Dans la variante selon laquelle la plage de fonctionnement nominale est un seuil, la valeur de signalisation peut être ajoutée lorsque le dispositif d'analyse 22 détecte une donnée qui atteint et/ou dépasse le seuil. L'algorithme peut être configuré pour actionner les moyens de signalisation 20 d'un défaut lorsqu'une donnée dépasse significativement le seuil. Par exemple, le seuil peut être une valeur positive. Ainsi, l'algorithme peut actionner les moyens de signalisation 20 d'un défaut lorsqu'une donnée est au moins dix fois supérieure au seuil. En variante, le seuil peut être une valeur négative. Ainsi, l'algorithme peut actionner les moyens de signalisation 20 d'un défaut lorsqu'une donnée est au moins dix fois inférieure au seuil.

L'algorithme peut être configuré pour actionner les moyens de signalisation 20 d'un défaut lorsque le compteur atteint et/ou dépasse une valeur d'activation prédéterminée. Par exemple, la valeur d'activation prédéterminée peut être positive. Ainsi, l'algorithme peut actionner les moyens de signalisation 20 d'un défaut lorsque le compteur est supérieur ou égal à la valeur d'activation prédéterminée. En variante, la valeur d'activation prédéterminée peut être négative. Ainsi, l'algorithme peut actionner les moyens de signalisation 20 d'un défaut lorsque le compteur est inférieur ou égal à la valeur d'activation prédéterminée.

La valeur de signalisation, associée à chaque détection de donnée en dehors de la plage de fonctionnement nominale, peut être constante. On parle alors d'incrémentation. Alternativement, la valeur de signalisation, associée à chaque détection de donnée en dehors de la plage de fonctionnement nominale, peut être variable d'une détection à l'autre. Par exemple, la valeur de signalisation, associée à chaque détection de donnée en dehors de la plage de fonctionnement nominale, peut être croissante ou décroissante d'une détection à l'autre. La valeur de signalisation peut ainsi varier, par exemple croitre ou décroitre, selon une suite régulière. En outre, la valeur de signalisation peut être négative ou positive.

Dans un mode de réalisation, lorsque le dispositif d'analyse 22 détecte une donnée dans la plage de fonctionnement nominale, le compteur est configuré pour retrancher la valeur de signalisation. Plus particulièrement, lorsque la valeur de signalisation, associée à chaque détection de donnée en dehors de la plage de fonctionnement nominale est variable d'une détection à l'autre, le compteur est configuré pour retrancher la valeur de signalisation précédemment ajoutée.

Le dispositif d'analyse 22 peut comprendre des moyens de stockage de donnée configurés pour stocker les données issues du dispositif de mesure 18, par exemple une mémoire telle qu'une mémoire de type flash, par exemple un disque dur. Le dispositif d'analyse 22 peut comprendre des moyens de traitement de donnée configurés pour exécuter l'algorithme, par exemple au moins un processeur.

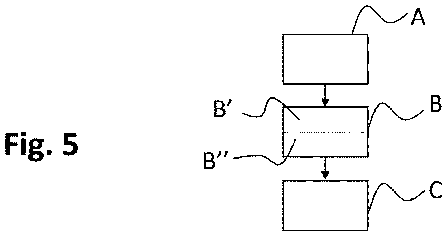

La figure 5 illustre un procédé pour la détection d'un défaut dans un système de ventilation comprenant une bouche 10 d'extraction ou insufflation, le procédé comportant les étapes suivantes :
- Mesurer A au moins une différence de pression au niveau de la bouche 10 d'extraction ou insufflation ;
- Analyser B l'au moins une différence de pression pour détecter un défaut, comprenant les étapes suivantes :
   o Comparer B' l'au moins une différence de pression avec une plage de fonctionnement nominale, et
   o Compenser B" des variations environnementales et/ou des incertitudes de mesure ;
- Signaler C lorsqu'un défaut est détecté.

Par exemple, l'étape d'analyse B est une étape d'analyse de l'au moins une différence de pression mesurée à l'étape de mesure A. Elle peut être réalisée par un algorithme tel que décrit précédemment.

L'étape de compensation B" des variations environnementales et/ou des incertitudes de mesure peut être réalisée par ajout une valeur de signalisation à un compteur si l'au moins une différence de pression est en dehors de la plage de fonctionnement nominale, et comparaison du compteur avec une valeur d'activation prédéterminée.

L'étape de signalisation C peut consister à signaler lorsque le compteur atteint et/ou dépasse la valeur d'activation prédéterminée.

## Revendications

1. Bouche (10) d'extraction ou insufflation d'air pour système de ventilation (100) d'un local, la bouche (10) d'extraction ou insufflation d'air comprenant une arrivée d'air (12) et une sortie d'air (14), et des moyens de détection (16) d'un défaut du système de ventilation (100) configurés pour détecter un défaut du système de ventilation (100) à distance de la bouche (10) d'extraction ou insufflation d'air les moyens de détection (16) d'un défaut du système de ventilation (100) comprenant :
- des moyens de signalisation (20) configurés pour émettre au moins un signal lorsqu'un défaut est détecté,
- un dispositif de mesure (18) configuré pour mesurer au moins une différence de pression au niveau de la bouche (10) d'extraction ou insufflation d'air, par exemple entre l'arrivée d'air (12) et la sortie d'air (14),
- un dispositif d'analyse (22) de données, configuré pour détecter une différence de pression entre l'arrivée d'air (12) et la sortie d'air (14), en dehors d'une plage de fonctionnement nominale,
la bouche (10) d'extraction ou insufflation d'air étant **caractérisée en ce que** le dispositif d'analyse (22) de données comprend un algorithme configuré pour compenser des variations environnementales et/ou des incertitudes du dispositif de mesure (18), le dispositif d'analyse (22) de données étant configuré pour actionner les moyens de signalisation (20) lorsqu'un défaut est détecté.

2. Bouche (10) d'extraction ou insufflation d'air selon la revendication 1, dans laquelle l'algorithme est configuré pour identifier une ou plusieurs différence(s) de pression mesurée(s) par le dispositif de mesure (18) comme correspondant à un défaut du système de ventilation.

3. Bouche (10) d'extraction ou insufflation d'air selon l'une quelconque des revendication 1 à 2, dans laquelle l'algorithme est configuré pour déterminer qu'il y a un défaut dans le système de ventilation si une série de différence(s) de pression correspond à un défaut du système de ventilation.

4. Bouche (10) d'extraction ou insufflation d'air selon l'une quelconque des revendications précédentes, dans laquelle l'algorithme comprend un compteur auquel une valeur de signalisation est ajoutée lorsque le dispositif d'analyse (22) détecte une différence de pression en dehors de la plage de fonctionnement nominale.

5. Bouche (10) d'extraction ou insufflation d'air selon la revendication 4, dans laquelle le compteur est configuré pour retrancher la valeur de signalisation lorsque le dispositif d'analyse (22) détecte une différence de pression dans la plage de fonctionnement nominale.

6. Bouche (10) d'extraction ou insufflation d'air selon l'une quelconque des revendications 4 à 5, dans laquelle l'algorithme est configuré pour actionner les moyens de signalisation (20) d'un défaut lorsque le compteur atteint et/ou dépasse une valeur d'activation prédéterminée.

7. Bouche (10) d'extraction ou insufflation d'air selon l'une quelconque des revendications précédentes, dans laquelle le dispositif de mesure (18) comporte au moins un capteur différentiel de pression configuré pour mesurer la différence de pression entre l'arrivée d'air (12) et la sortie d'air (14) de la bouche (10) d'extraction ou insufflation d'air.

8. Bouche (10) d'extraction ou insufflation d'air selon l'une quelconque des revendications 1 à 6, dans laquelle le dispositif de mesure (18) comporte un premier capteur de pression disposé au niveau de l'arrivée d'air (12), et un deuxième capteur de pression disposé au niveau de la sortie d'air (14).

9. Bouche (10) d'extraction ou insufflation d'air selon l'une quelconque des revendications précédentes, dans laquelle le dispositif de mesure (18) est configuré pour effectuer plusieurs mesures, à intervalles réguliers ou irréguliers.

10. Système de ventilation (100) comportant une bouche (10) d'extraction et/ou insufflation d'air selon l'une quelconque des revendications précédentes, un ventilateur (102) et un conduit (104) de circulation d'air reliant le ventilateur (102) à la bouche (10) d'extraction ou insufflation d'air.

11. Procédé pour la détection d'un défaut dans un système de ventilation comprenant une bouche d'extraction ou insufflation, le procédé comportant les étapes suivantes :
- Mesurer (A) au moins une différence de pression au niveau de la bouche d'extraction ou insufflation ;
- Analyser (B) l'au moins une différence de pression pour détecter un défaut, comprenant l'étape suivante :
o Comparer (B') l'au moins une différence de pression avec une plage de fonctionnement nominale, et
- Signaler (C) lorsqu'un défaut est détecté ;
le procédé étant **caractérisé en ce que** l'étape d'analyser (B) l'au moins une différence de pression au niveau de la bouche d'extraction ou insufflation comprend l'étape suivante :
o Compenser (B") des variations environnementales et/ou des incertitudes de mesure.

12. Procédé selon la revendication 11, dans lequel :
- L'étape de compensation (B") des variations environnementales et/ou des incertitudes de mesure est réalisée par ajout d'une valeur de signalisation à un compteur si l'au moins une différence de pression est en dehors de la plage de fonctionnement nominale, et comparaison du compteur avec une valeur d'activation prédéterminée ; et
- L'étape de signalisation (C) consiste à signaler lorsque le compteur atteint et/ou dépasse la valeur d'activation prédéterminée.

13. Procédé selon l'une quelconque des revendications 11 à 12 pour la détection d'un défaut dans un système de ventilation comprenant une bouche (10) d'extraction ou insufflation selon l'une quelconque des revendications 1 à 9.

14. Procédé selon l'une quelconque des revendications 11 à 12 pour la détection d'un défaut dans un système de ventilation (100) selon la revendication 10.

## Patentansprüche

1. Luftabsaug- oder -einblasöffnung (10) für ein Lüftungssystem (100) eines Raums, wobei die Luftabsaug- oder -einblasöffnung (10) einen Lufteinlass (12) und einen Luftauslass (14) und Mittel (16) zum Erkennen eines Fehlers im Lüftungssystem (100) umfasst, die so eingerichtet sind, dass sie einen Fehler im Lüftungssystem (100) von der Luftabsaug- oder -einblasöffnung (10) aus der Ferne erkennen, wobei die Mittel (16) zum Erkennen eines Fehlers im Lüftungssystem (100) Folgendes umfassen:
- Signalmittel (20), die so eingerichtet sind, dass sie mindestens ein Signal ausgeben, wenn ein Fehler erkannt wird,
- eine Messvorrichtung (18), die so eingerichtet ist, dass sie mindestens eine Druckdifferenz an der Luftabsaug- oder -einblasöffnung (10) misst, beispielsweise zwischen dem Lufteinlass (12) und dem Luftauslass (14),
- eine Datenanalysevorrichtung (22), die so eingerichtet ist, dass sie eine Druckdifferenz zwischen dem Lufteinlass (12) und dem Luftauslass (14) außerhalb eines Nennbetriebsbereichs erkennt,
wobei die Luftabsaug- oder -einblasöffnung (10) **dadurch gekennzeichnet ist, dass** die Datenanalysevorrichtung (22) einen Algorithmus umfasst, der so eingerichtet ist, dass er Umgebungsschwankungen und/oder Unsicherheiten der Messvorrichtung (18) kompensiert, wobei die Datenanalysevorrichtung (22) so eingerichtet ist, dass sie die Signalmittel (20) betätigt, wenn ein Fehler erkannt wird.

2. Luftabsaug- oder -einblasöffnung (10) nach Anspruch 1, wobei der Algorithmus so eingerichtet ist, dass er eine oder mehrere von der Messvorrichtung (18) gemessene Druckdifferenz(en) als einen Fehler im Lüftungssystem identifiziert.

3. Luftabsaug- oder Lufteinblasöffnung (10) nach einem der Ansprüche 1 bis 2, wobei der Algorithmus so eingerichtet ist, dass er feststellt, dass ein Fehler im Lüftungssystem vorliegt, wenn eine Reihe von Druckdifferenzen einem Fehler im Lüftungssystem entspricht.

4. Luftabsaug- oder Lufteinblasöffnung (10) nach einem der vorhergehenden Ansprüche, wobei der Algorithmus einen Zähler umfasst, zu dem ein Signalwert hinzugefügt wird, wenn die Analysevorrichtung (22) eine Druckdifferenz außerhalb des Nennbetriebsbereichs erkennt.

5. Luftabsaug- oder Lufteinblasöffnung (10) nach Anspruch 4, wobei der Zähler so eingerichtet ist, dass er den Signalwert abzieht, wenn die Analysevorrichtung (22) eine Druckdifferenz im Nennbetriebsbereich erkennt.

6. Luftabsaug- oder Lufteinblasöffnung (10) nach einem der Ansprüche 4 bis 5, wobei der Algorithmus so eingerichtet ist, dass er die Signalmittel (20) eines Fehlers betätigt, wenn der Zähler einen vorbestimmten Aktivierungswert erreicht und/oder überschreitet.

7. Luftabsaug- oder Lufteinblasöffnung (10) nach einem der vorhergehenden Ansprüche, wobei die Messvorrichtung (18) mindestens einen Differenzdrucksensor enthält, der so eingerichtet ist, dass er die Druckdifferenz zwischen dem Lufteinlass (12) und dem Luftauslass (14) der Luftabsaug- oder Lufteinblasöffnung (10) misst.

8. Luftabsaug- oder Lufteinblasöffnung (10) nach einem der Ansprüche 1 bis 6, wobei die Messvorrichtung (18) einen ersten am Lufteinlass (12) angeordneten Drucksensor und einen zweiten am Luftauslass (14) angeordneten Drucksensor enthält.

9. Luftabsaug- oder Lufteinblasöffnung (10) nach einem der vorhergehenden Ansprüche, wobei die Messvorrichtung (18) so eingerichtet ist, dass sie mehrere Messungen in regelmäßigen oder unregelmäßigen Abständen durchführt.

10. Lüftungssystem (100), das eine Luftabsaug- und/oder Lufteinblasöffnung (10) nach einem der vorhergehenden Ansprüche, einen Lüfter (102) und einen Luftumwälzkanal (104) enthält, der den Lüfter (102) mit der Luftabsaug- oder Lufteinblasöffnung (10) verbindet.

11. Verfahren zum Erkennen eines Fehlers in einem Lüftungssystem, das eine Absaug- oder -Einblasöffnung umfasst, wobei das Verfahren die folgenden Schritte enthält:
- Messen (A) mindestens einer Druckdifferenz an der Absaug- oder Einblasöffnung;
- Analyiseren (B) mindestens einer Druckdifferenz, um einen Fehler zu erkennen, umfassend den folgenden Schritt:
o Vergleichen (B') mindestens einer Druckdifferenz mit einem Nennbetriebsbereich, und
- Signalisieren (C), wenn ein Fehler erkannt wird;
wobei das Verfahren **dadurch gekennzeichnet ist, dass** der Schritt des Analysierens (B) der mindestens einen Druckdifferenz an der Absaug- oder Einblasöffnung den folgenden Schritt umfasst:
o Kompensieren (B") von Umgebungsschwankungen und/oder Messunsicherheiten.

12. Verfahren nach Anspruch 11, wobei:
- der Schritt des Kompensierens (B") der Umgebungsschwankungen und/oder Messunsicherheiten durch das Hinzufügen eines Signalwerts zu einem Zähler, wenn die mindestens eine Druckdifferenz außerhalb des Nennbetriebsbereichs liegt, und das Vergleichen des Zählers mit einem vorbestimmten Aktivierungswert umgesetzt wird; und
- der Schritt des Signalisierens (C) besteht darin, zu signalisieren, wenn der Zähler den vorbestimmten Aktivierungswert erreicht und/oder überschreitet.

13. Verfahren nach einem der Ansprüche 11 bis 12 zum Erkennen eines Fehlers in einem Lüftungssystem, das eine Absaug- oder Einblasöffnung (10) nach einem der Ansprüche 1 bis 9 umfasst.

14. Verfahren nach einem der Ansprüche 11 bis 12 zum Erkennen eines Fehlers in einem Lüftungssystem (100) nach Anspruch 10.

## Claims

1. An air extraction or blowing vent (10) for a ventilation system (100) of a room, the air extraction or blowing vent (10) comprising an air inlet (12) and an air outlet (14), and means (16) for detecting a fault in the ventilation system (100) configured to detect a fault in the ventilation system (100) at a distance from the air extraction or blowing vent (10), the means (16) for detecting a fault in the ventilation system (100) comprising:
- signaling means (20) configured to emit at least one signal when a fault is detected,
- a measuring device (18) configured to measure at least one pressure difference at the air extraction or blowing vent (10), for example between the air inlet (12) and the air outlet (14),
- a data analysis device (22), configured to detect a pressure difference between the air inlet (12) and the air outlet (14), outside a nominal operating range,
the air extraction or blowing vent (10) being **characterized in that** the data analysis device (22) comprises an algorithm configured to compensate for environmental variations and/or uncertainties of the measuring device (18), the data analysis device (22) being configured to actuate the signaling means (20) when a fault is detected.

2. The air extraction or blowing vent (10) according to claim 1, wherein the algorithm is configured to identify one or several pressure difference(s) measured by the measuring device (18) as corresponding to a fault in the ventilation system.

3. The air extraction or blowing vent (10) according to any one of claims 1 and 2, wherein the algorithm is configured to determine that there is a fault in the ventilation system if a series of pressure difference(s) corresponds to a fault in the ventilation system.

4. The air extraction or blowing vent (10) according to any one of the preceding claims, wherein the algorithm comprises a counter to which a signaling value is added when the analysis device (22) detects a pressure difference outside the nominal operating range.

5. The air extraction or blowing vent (10) according to claim 4, wherein the counter is configured to subtract the signaling value when the analysis device (22) detects a pressure difference within the nominal operating range.

6. The air extraction or blowing vent (10) according to any one of claims 4 and 5, wherein the algorithm is configured to actuate the means (20) for signaling a fault when the counter reaches and/or exceeds a predetermined activation value.

7. The air extraction or blowing vent (10) according to any one of the preceding claims, wherein the measuring device (18) includes at least one differential pressure sensor configured to measure the pressure difference between the air inlet (12) and the air outlet (14) of the air extraction or blowing vent (10).

8. The air extraction or blowing vent (10) according to any one of claims 1 to 6, wherein the measuring device (18) includes a first pressure sensor disposed at the air inlet (12), and a second pressure sensor disposed at the air outlet (14).

9. The air extraction or blowing vent (10) according to any one of the preceding claims, wherein the measuring device (18) is configured to perform several measurements, at regular or irregular intervals.

10. A ventilation system (100) including an air extraction and/or blowing vent (10) according to any one of the preceding claims, a fan (102) and an air circulation duct (104) connecting the fan (102) to the air extraction or blowing vent (10).

11. A method for detecting a fault in a ventilation system comprising an extraction or blowing vent, the method comprising the following steps:
- Measuring (A) at least one pressure difference at the extraction or blowing vent;
- Analyzing (B) the at least one pressure difference to detect a fault, comprising the following step:
o Comparing (B') the at least one pressure difference with a nominal operating range, and
- Signaling (C) when a fault is detected;
the method being **characterized in that** the step of analyzing (B) the at least one pressure difference at the extraction or blowing vent comprises the following step:
o Compensating (B‴) for environmental variations and/or measurement uncertainties.

12. The method according to claim 11, wherein:
- The step of compensating (B‴) for environmental variations and/or measurement uncertainties is carried out by adding a signaling value to a counter if the at least one pressure difference is outside the nominal operating range, and comparing the counter with a predetermined activation value; and
- The signaling step (C) consists in signaling when the counter reaches and/or exceeds the predetermined activation value.

13. The method according to any one of claims 11 and 12 for detecting a fault in a ventilation system comprising an extraction or blowing vent (10) according to any one of claims 1 to 9.

14. The method according to any one of claims 11 and 12 for detecting a fault in a ventilation system (100) according to claim 10.
